Europäisches Patentamt

European Patent Office

Office européen des brevets

(19)

(11) **EP 1 438 784 B1**

(12) **EUROPÄISCHE PATENTSCHRIFT**

(45) Veröffentlichungstag und Bekanntmachung des Hinweises auf die Patenterteilung:
**27.04.2005 Patentblatt 2005/17**

(21) Anmeldenummer: **02802297.8**

(22) Anmeldetag: **17.10.2002**

(51) Int Cl.⁷: **H02M 3/335**

(86) Internationale Anmeldenummer:
**PCT/EP2002/011641**

(87) Internationale Veröffentlichungsnummer:
**WO 2003/038976 (08.05.2003 Gazette 2003/19)**

(54) **SYNCHRONGLEICHRICHTERSCHALTUNG**

SYNCHRONOUS RECTIFIER CIRCUIT

CIRCUIT REDRESSEUR SYNCHRONE

(84) Benannte Vertragsstaaten:
**DE FR GB IT SE**

(30) Priorität: **26.10.2001 DE 10152901**
**17.07.2002 DE 10232424**

(43) Veröffentlichungstag der Anmeldung:
**21.07.2004 Patentblatt 2004/30**

(73) Patentinhaber: **Minebea Co., Ltd.**
**Kitasaku-gun, Nagano-ken (JP)**

(72) Erfinder: **MÜLLER, Helmut**
**86150 Augsburg (DE)**

(74) Vertreter: **Liesegang, Eva**
**Forrester & Boehmert,**
**Pettenkoferstrasse 20-22**
**80336 München (DE)**

(56) Entgegenhaltungen:
**DE-A- 19 516 861**     **DE-A- 19 704 604**
**DE-A- 19 943 575**

**Beschreibung**

Die Erfindung betrifft eine Synchrongleichrichterschaltung zur Verwendung in einem Gegentakt-Gleichspannungswandler wie er z.B. aus der DE 19 516 861 A1 bekannt geworden ist.

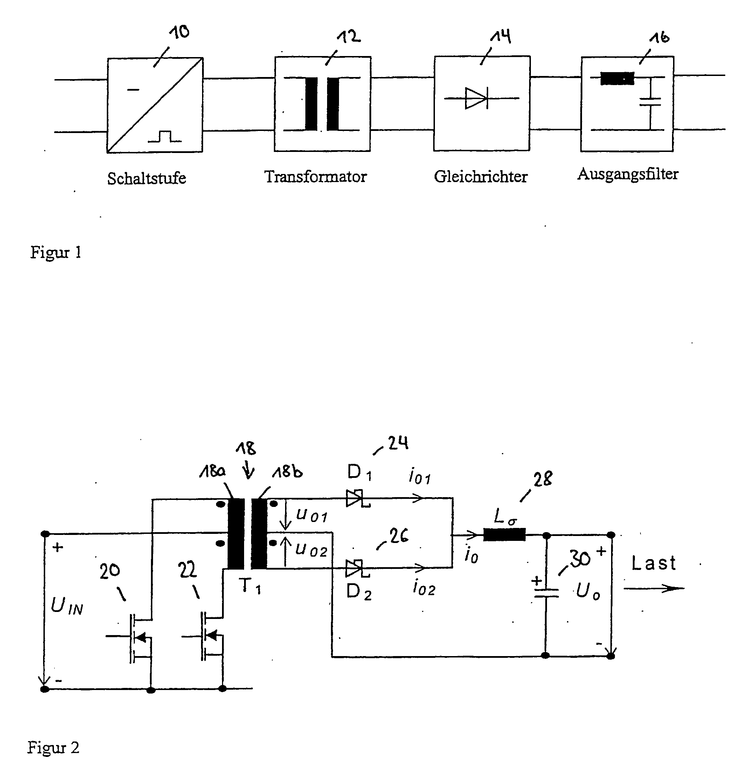

Gleichspannungswandler haben die Aufgabe, eine Gleichspannung an ihrem Eingang mit möglichst hohem Wirkungsgrad in einer Ausgangs-Gleichspannung mit einem anderen Wert umzuformen. Dieser Ausgangswert kann größer oder kleiner als der Eingangswert sowie einstellbar sein. Die Eingangs-Gleichspannung wird in dem Gleichspannungswandler zunächst in eine Wechselspannung mit einem rechteckigen Verlauf umgewandelt, wobei Schaltstufen zum Einsatz kommen. Die "zerhackte" Gleichspannung wird während der Einschaltdauer als magnetische Energie in einer Drossel gespeichert, während der Ausschaltdauer wirkt sie als eine Selbstinduktionsspannung am Ausgang des Gleichspannungswandlers. Gleichspannungswandler, die nach diesem Prinzip arbeiten, werden Drosselwandler genannt. Bei diesen sind Eingang und Ausgang galvanisch nicht voneinander getrennt. Um eine Potentialtrennung zu erreichen, werden im Stand der Technik Transformatoren eingesetzt. Die induzierte Spannung tritt bei diesen an der Sekundärwicklung auf, wobei die Spannungsübersetzung durch die Wicklungszahl bestimmt werden kann. Ein Blockdiagramm eines solchen als Transformatorwandler bezeichneten Gleichspannungswandlers ist in Fig. 1 gezeigt.

Fig. 1 zeigt die Grundelemente eines Transformatorwandlers mit einer Eingangsschaltstufe 10, einem Leistungstransformator 12, einer Gleichrichterschaltung 14 und einem Ausgangsfilter 15. Im Stand der Technik unterscheidet man zwischen Eintakt- und Gegentaktwandlem. Ein Eintaktwandler kann als ein einfacher, elektronisch gesteuerter Schalter angesehen werden, während bei einem Gegentaktwandler Umschaltvorgänge auftreten und ein Transformator 12 mit zwei Primärwicklungen erforderlich sein kann. Gegentaktwandler sind aus einer Parallelschaltung von zwei Eintaktwandlern ableitbar, wobei die elektronische Umschaltung durch zwei Schaltstufen realisiert wird und immer eine der beiden Primärwicklungen stromdurchflossen ist. Die Erfindung betrifft das Gebiet der Gegentaktwandler.

In der Praxis werden solche Gegentaktwandler in Schaltnetzteilen, beispielsweise in Serverarchitekturen für Telekomanwendungen, in PCs, in industriellen Anwendungen und vielen anderen Bereichen eingesetzt. Die Erfindung ist besonders vorteilhaft in verteilten Energieversorgungssystemen, in denen mehrere Stufen hintereinander geschaltet sind. In neuen Serverarchitekturen werden z.B. Netzteile verwendet, in denen zunächst die Netzspannung in eine Busspannung von etwa 48 bis 50 V umgewandelt wird. Innerhalb des Serveruntersystems findet eine zweite Wandlung auf beispielsweise +12 V statt. Die Spezialspannungen für die verschiedenen Bauteile, wie den Mikroprozessor, RAMs etc., werden lokal von sogenannten Spannungsreglermodulen erzeugt, die mit der 12 V-Schiene verbunden sind.

Aufgrund der Reihenschaltung verschiedener Leistungsstufen muß jede dieser Wandlerstufen so effizient wie möglich arbeiten. Um den Wirkungsgrad der Schaltnetzteile zu maximieren müssen diese in bezug auf sämtliche Quellen hinsichtlich der Energieverluste optimiert werden. Energieverluste sind abhängig von der Art des Wandlertyps, wie Eintakt- oder Gegentaktwandler, und maßgeblich von der Arbeitsweise der Gleichrichterschaltung.

Ein großer Vorteil der Gegentaktwandler ist die gute Ausnutzung der Induktivitäten und die Ansteuerung des Übertragers in positiver und negativer Richtung. Ein weiterer Vorteil ist der gute Wirkungsgrad des Wandlers und die hohe Ausgangsleistung.

Das Prinzipschaltbild eines Gegentaktwandlers mit Shottky-Dioden für die Gleichrichtung auf der Sekundärseite ist in Fig. 2 gezeigt. Der Gegentakt-Durchflußwandler der Fig. 2 ist im Stand der Technik bekannt und seine Funktion ist beispielsweise in Billings, Keith: Switch Mode Power Supply Handbook, 2. Ausgabe, New York: McGraw-Hill, 1999, beschrieben. Der Wandler umfaßt einen Leistungstransformator 18 mit einer Primärseite 18a und einer Sekundärseite 18b. Primärseite 18a und Sekundärseite 18b weisen jeweils zwei Wicklungsabschnitte auf. Den beiden Wicklungsabschnitten auf der Primärsseite 18a sind zwei Leistungstransistoren 20, 22 zur Ansteuerung zugeordnet. Den beiden Wicklungsabschnitten auf der Sekundärseite 18b sind zwei sekundäre Dioden 24 bzw. 26 zugeordnet, die mit einer Ausgangsfilterstufe aus einer Speicherdrossel 28 und einem Speicherkondensator 30 verbunden sind, wie in Fig. 2 gezeigt. Die Leistungstransistoren 20, 22 werden beispielsweise durch einen nicht gezeigten Steuer-IC angesteuert.

Wird der Transistor 22 angesteuert, fließt ein Strom über den zugeordneten Wicklungsabschnitt des Leistungstransformators 18 sowie über den Transistor 22. Die Polarität des zugehörigen Wicklungsabschnitts auf der Sekundärseite 18b des Leistungstransistors 18 läßt die Diode 26 sperren. Gleichzeitig wird auch in dem anderen Wicklungsabschnitt auf der Sekundärseite 18b eine Spannung induziert, was einen Stromfluß durch die Diode 24 über die Speicherdrossel 28 zur Folge hat. Nach ausreichender Energieübertragung von der Primärseite auf die Sekundärseite wird der Transistor 22 gesperrt. Im nächsten Zyklus wird der Transistor 20 angesteuert. Der jetzt durch den zweiten Wicklungsabschnitt der Primärseite 18a fließende Strom bewirkt eine Umkehrung der Polarität der zugehörigen Wicklung auf der Sekundärseite 18b. Die Diode 24 sperrt, die Diode 26 leitet und ermöglicht einen Stromfluß über die Drossel 28, wie im ersten Zyklus. Um sicherzustellen, daß die beiden Leistungstransistoren 20, 22 nicht zur gleichen Zeit leitend sind, wird zwischen dem erläuterten ersten und dem zweiten Zyklus eine Zwangspause eingefügt, die sogenannte Freilaufphase. Während dieser Freilaufphase wird der Stromkreis auf der Sekundärseite 18b des Transformators 18 aus der Speicherdrossel 28, dem Speicherkondensator 30, den beiden leitenden Dioden 24 und 26 und dem angeschlossenen Verbraucher (nicht gezeigt) gebildet.

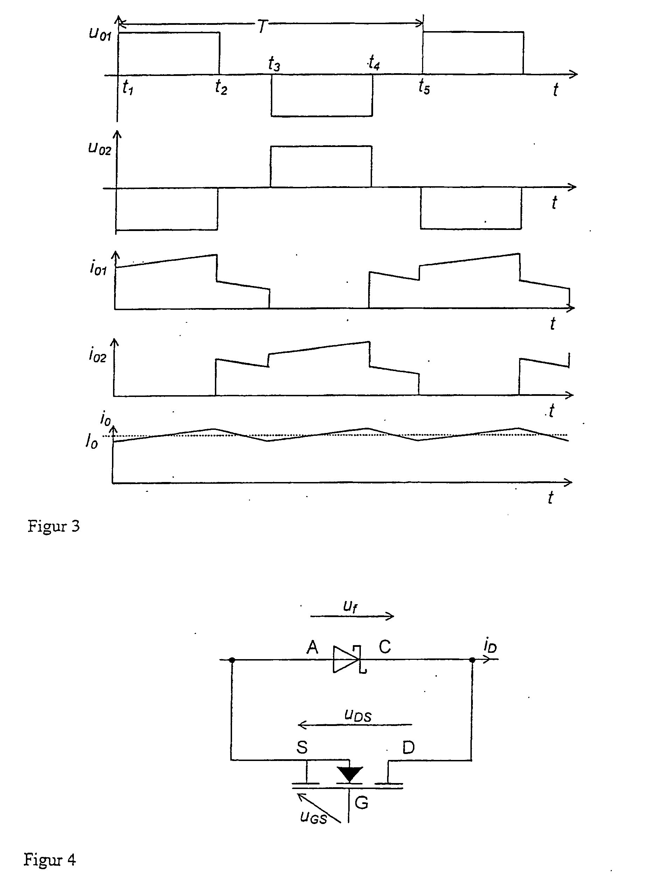

Fig. 3 zeigt die idealisierten Wellenformen der Ausgangsspannungen $u_{01}$, $u_{02}$ an den beiden Wicklungsabschnitten auf der Sekundärseite 18b des Leistungstransformators 18, die Vorwärtsströme $i_{01}$, $i_{02}$ durch die Dioden 24 bzw. 26 und den Ausgangsstrom $i_0$ durch die Speicherdrossel 28.

Während des ersten Zeitintervalls von $t_1$ bis $t_2$ wird eine positive Spannung $u_{01}$ erzeugt. Die Diode 24 leitet. Der gesamte Ausgangsstrom $i_0$ wird durch diese und den oberen Sekundärwicklungsabschnitt des Leistungstransformators 18 zum Ausgang geleitet. Der Anstieg des Ausgangsstroms wird durch die Spannungsdifferenz $u_{01}$-$u_0$ (Ausgangsspannung) und die Summe der Induktivitäten des Sekundärkreises bestimmt

Das zweite Zeitintervall von $t_2$ bis $t_3$ entspricht der sogenannten Freilaufphase. Die Ausgangsspannungen $u_{01}$ und $u_{02}$ des Transformators 18 sind null. Der Strom $i_0$ wird durch die Induktivitäten des Sekundärkreises bestimmt. Wenn der obere und der untere Wicklungsabschnitt auf der Sekundärseite 18b identisch sind, wird der Ausgangsstrom $i_0$ in zwei Teile aufgeteilt. Jede der Dioden 24, 26 führt jeweils die Hälfte des Ausgangsstroms $i_0$. Während dieses Zeitintervalls nimmt der Ausgangsstrom ab.

Während des dritten Zeitintervalls von $t_3$ bis $t_4$ wird eine positive Spannung $u_{02}$ erzeugt, und die Diode 26 leitet. Dies führt zu einem entsprechenden Verhalten wie im ersten Zeitintervall.

Während des letzten Zeitintervalls von $t_4$ bis $t_5$ der Periode T sind beide Leistungstransistoren 20, 22 abgeschaltet. Die Spannungen $u_{01}$ und $u_{02}$ sind wiederum null, was der Freilaufphase entspricht.

Bei der in Fig. 2 gezeigten Ausführungsform des Gleichspannungswandlers wird der sekundäre Gleichrichter durch Dioden gebildet. Die Gleichrichterdioden erzeugen Verluste, die von der Durchlaßspannung der Dioden 24, 26 abhängig sind und sich aus Durchlaßverlusten und Schaltverlusten der Dioden zusammensetzen.

Der Durchlaßverlust $P_{DC}$ einer Diode ist gegeben durch das Produkt ihres Vorwärtsspannungsabfalls $u_F$ und ihres Vorwärtsstroms $i_D$. (siehe auch Fig. 4)

$$P_{DC} = u_F \cdot i_D.$$

Die Durchlaßspannung steigt mit zunehmender Last und liegt je nach Diodentyp zwischen 0,5 V und 1,5 V. Beträgt die Ausgangsspannung des Wandlers z. B. 3,3 V, was z.B. einer Prozessorspannung entspricht, fallen alleine etwa 30% der Spannung an den Gleichrichterdioden ab. Bei höheren Ausgangsspannungen des Wandlers, z.B. 48 V für Telekommunikationsanwendungen, ist der Spannungsabfall an den Dioden im Verhältnis geringer, jedoch noch immer nicht vernachlässigbar.

Der Schaltverlust einer Diode kann durch folgende Gleichung abgeschätzt werden:

$$P_{DS} = Q_F \cdot \hat{u} \cdot f,$$

wobei $Q_F$ die wiedergewonnene Ladung während der Abfallzeit des Umkehrstroms der Diode ist, f ist der Kehrwert der Periode T, und ü ist der Spitzenwert der Diodenumkehrspannung.

Eine Verringerung des oben erläuterten Durchlaßverlustes kann nur durch eine Verringerung des Spannungsabfalls erreicht werden.

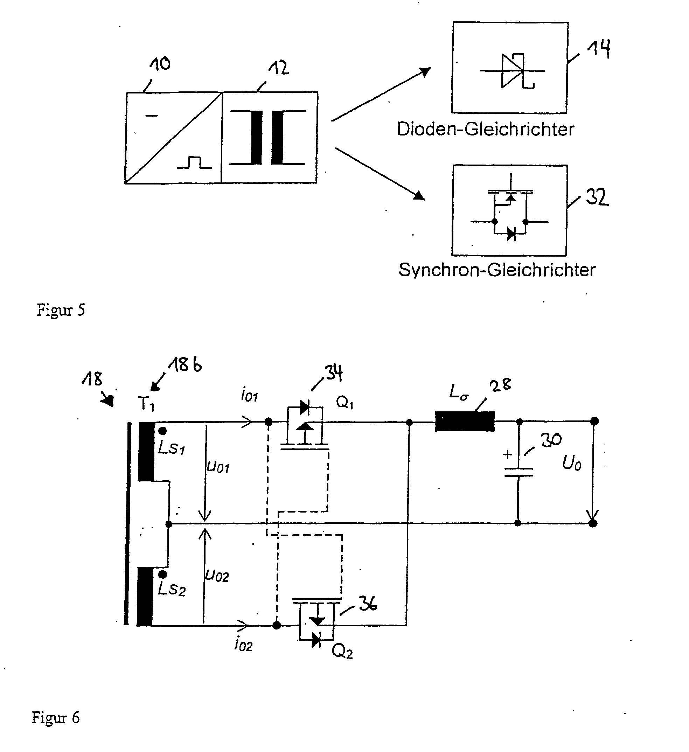

Eine Lösung besteht in der Verwendung eines MOSFET in Parallelschaltung zu der Diode. Dies ist in Fig. 4 gezeigt. Der MOSFET wird eingeschaltet, wenn ein Strom in Vorwärtsrichtung an der Diode anliegt, und abgeschaltet, wenn ein Umkehrstrom vorliegt. Dies wird Synchrongleichrichtung genannt. Die Diode in einem Schaltkreis, z.B. die Dioden 24, 26, kann durch einen MOSFET ersetzt werden. Im Falle eines MOSFET mit vertikaler Struktur wird dessen antiparallele Diode oder Inversdiode (Body-Diode) ausgenutzt. Dies ist in Fig. 5 gezeigt, wobei gleiche Bauteile mit denselben Bezugszeichen wie in Fig. 1 bezeichnet werden. Fig. 5 zeigt schematisch den Ersatz des Diodengleichrichters 14 durch eine Synchrongleichrichterschaltung 32 auf der Basis von MOSFETs.

Mit Bezug auf Fig. 4 und 5 wird deutlich, daß der Spannungsabfall $u_{DS}$ an dem MOSFET durch den Einschaltwiderstand $R_{DS(ON)}$ des MOSFET und den tatsächlichen Drainstrom, der gleich dem Diodenstrom $i_D$ sein muß, bestimmt wird. Um eine Verringerung des Energieverlustes zu erreichen, muß folgendes gelten:

$$|u_{DS}| = |R_{DS(ON)} \cdot i_D| > u_F$$

Der Durchlaßverlust kann somit verringert werden, indem ein MOSFET mit niedrigem Durchlaßwiderstand $R_{DS(ON)}$ gewählt wird.

Der MOSFET benötigt ein Steuersignal zum Ein- und Ausschalten. Die Erzeugung des Steuersignals hat entscheidenden Einfluß auf das Schaltverhalten. Auch die Energieverluste in diesem Schaltkreis müssen berücksichtigt werden. Im Stand der Technik sind verschiedene Ansteuerverfahren für Synchrongleichrichter mit MOSFET bekannt, die grob klassifiziert werden können als selbstgesteuert, IC-gesteuert und stromgesteuert.

Fig. 6 zeigt ein vereinfachtes Schaltbild der Sekundärseite einer selbstgesteuerten Synchrongleichrichterschaltung, wobei entsprechende Bauteile wie in Fig. 2 mit denselben Bezugzeichen bezeichnet sind. Die Leistungsdioden 24, 26 aus Fig. 2 sind ersetzt durch MOSFET 34 bzw. 36. Der erste Wicklungsabschnitt auf der Sekundärseite 18b ist mit $Ls_1$ und der zweite Wicklungsabschnitt ist mit $Ls_2$ bezeichnet.

Bei dem selbstgesteuerten Synchrongleichrichter gemäß Fig. 5 wird die Ausgangsspannung des Leistungstransformators 18 zum Ansteuern der MOSFET 34, 36 verwendet. Ein Vorteil dieser Schaltung ist der geringe Schaltungsaufwand, weil keine zusätzlichen Treiberschaltungen für die Ansteuerung der MOSFET 34, 36 notwendig sind.

Mit Bezug auf Fig. 3, ist im Zeitintervall von $t_1$ bis $t_2$ die Ausgangsspannung $u_{01}$ am ersten Wicklungsabschnitt $Ls_1$ positiv und $u_{02}$ am zweiten Wicklungsabschnitt $Ls_2$ ist negativ. Unter diesen Bedingungen wird der P-Kanal-MOSFET 34 eingeschaltet, weil seine Gatespannung negativ ist. Im Zeitintervall $t_3$ bis $t_4$ gilt das entsprechende Schaltverhalten für den P-Kanal-MOSFET 36; der MOSFET 34 ist ausgeschaltet und der MOSFET 36 ist eingeschaltet. Während dieser beiden Zeitintervalle arbeiten die MOSFET-Schalter 34, 36 zufriedenstellend. Während der Freilaufphase wird jedoch keine Steuerspannung erzeugt. Der Strom fließt durch die Inversdioden der MOSFET, wodurch höhere Durchlaßverluste als notwendig erzeugt werden.

Weitere Nachteile der selbstgesteuerten Synchrongleichrichterbauweise sind, daß P-Kanal-MOSFET benötigt werden, welche wesentlich teurer sind und einen höheren Durchlaßwiderstand haben als vergleichbare N-Kanal-MOSFET. Ferner wird der Bereich der Transformatorausgangsspannung durch die Gatespannung der MOSFET 34, 36 begrenzt. Sie muß höher sein als die Schwellspannung und niedriger als die maximal zulässige Gate-Spannung der MOSFET von etwa 30 V.

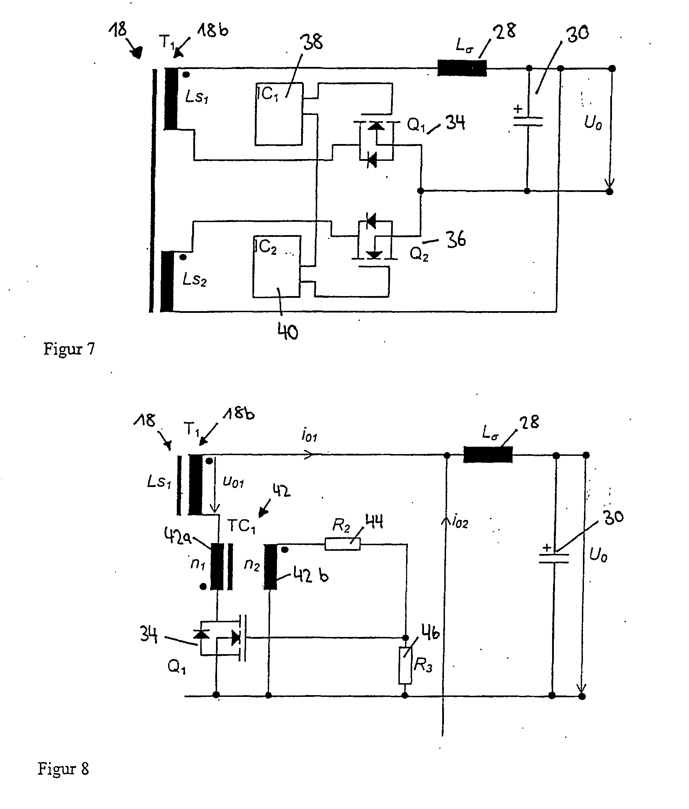

Fig. 7 zeigt ein schematisches Schaltbild der Sekundärseite eines Synchrongleichrichters mit IC-Ansteuerung, wobei gleiche Bauteile wie in Fig. 6 mit denselben Bezugzeichen bezeichnet sind. Bei dieser Synchrongleichrichter-Bauart werden Ansteuer-ICs 38, 40 zur Ansteuerung der MOSFET 34, 36 verwendet. Es gibt nur wenige Hersteller, welche solche speziellen Ansteuer-ICs für Synchrongleichrichter anbieten. Die IC-Bausteine 38, 40 tasten die Sekundärspannungen des Transformators 18 ab und schalten die MOSFET 34, 36 je nach Spannungsverlauf ein bzw. aus. Durch die elektronische Steuerung wird das synchrone Ein- und Ausschalten des Synchrongleichrichters gewährleistet. Gegen die Verwendung der Ansteuer-ICs 38, 40 spricht jedoch ihre schwere Verfügbarkeit auf dem Markt, sowie die relativ hohen Kosten und der erhöhte Aufwand für das Anschließen und Versorgen der Ansteuer-ICs 38, 40.

Fig. 8 schließlich zeigt ein schematisches Schaltbild der Sekundärseite eines stromgesteuerten Synchrongleichrichters, wobei in Fig. 8 nur der obere Teil der Sekundärseite 18b mit dem ersten sekundären Wicklungsabschnitt $Ls_1$ gezeigt ist, wobei der untere Teil mit dem zweiten sekundären Wicklungsabschnitt $Ls_2$ spiegelbildlich hierzu aufgebaut ist.

Bei dem stromgesteuerten Synchrongleichrichter wird der Leistungs-MOSFET 34 (und auch 36, in Fig. 8 nicht gezeigt) über einen Stromwandler 42 angesteuert. Der Stromwandler 42 ist zwischen dem oberen Wicklungsabschnitt $Ls_1$ auf der Sekundärseite 18b des Leistungstransformators 18 und dem MOSFET 34 in Reihe geschaltet und weist eine Primärwicklung 42a und eine Sekundärwicklung 42b auf. Die Sekundärwicklung 42b ist über einen Spannungsteiler aus zwei Widerständen 44, 46 mit dem Gate des MOSFET 34 verbunden.

Wenn der Transformator 18 so angesteuert wird, daß ein Strom durch den Wicklungsabschnitt $Ls_1$ der Sekundärseite 18b fließt, fließt auch ein Strom durch die Inversdiode des MOSFET 34, und der Stromwandler 42 erzeugt einen Strom in seiner Sekundärwicklung 42b. Dieser Strom erzeugt einen Spannungsabfall über dem Widerstand 46, der gleich der Gatespannung des MOSFET 34 ist. Der Wert des Spannungsabfalls kann durch das Verhältnis der beiden Widerstände 44, 46 eingestellt werden.

Der MOSFET 34 wird während des Zeitintervalls $t_1$ bis $t_3$ eingeschaltet; d.h. er ist auch während der Freilaufphase eingeschaltet. Wenn ein Strom in umgekehrter Richtung fließt, wird die Ausgangsspannung auf der Sekundärseite 42 des Stromwandlers 42 negativ und der MOSFET 34 schaltet ab. Das entsprechende Verhalten, jedoch mit umgekehrtem Vorzeichen gilt für den zweiten Abschnitt $Ls_2$ des Leistungstransformators 18 und den zweiten MOSFET 36, die in Fig. 8 nicht gezeigt sind.

Mit der Ansteuerung der Synchrongleichrichter mittels Stromwandler nach Fig. 8 ergeben sich jedoch einige Nachteile. Ein MOSFET benötigt einerseits einen hohen Stromimpuls zum Einschalten, was bedeutet, daß das Wicklungsverhältnis n2/n1 des Stromwandlers niedrig sein muß. Andererseits kann während des eingeschalteten Zustandes der Gatestrom des MOSFET vernachlässigt werden, was ein hohes Wicklungsverhältnis n2/n1 des Stromwandlers erfordert.

Ein ähnlicher Stand der Technik, wie er oben beschrieben wurde, jedoch in bezug auf einen Eintaktdurchflußwandler mit Synchrongleichrichtung mit einem Stromwandler ist beschrieben in "Synchronous Rectification Circuit Using A Current Transformer", Y. Kubota et al., NTELC Conference Proceedings, September 2000, Seiten 267 bis 273.

Ausgehend von dem beschriebenen Stand der Technik ist es eine Aufgabe der Erfindung, eine Synchrongleichrichterschaltung für einen Gegentaktwandler anzugeben, die ein möglichst schnelles Schalten der MOSFET-Transistoren erreicht und gleichzeitig eine möglichst geringe Verlustleistung erzeugt. Dieses Ziel soll insbesondere dadurch erreicht werden, daß ein höher Einschaltstrom für die MOSFET erzeugt wird, um die Durchflußzeit durch die Inversdioden so klein wie möglich zu halten, und daß während des eingeschalteten Zustands der MOSFET der Ansteuerstrom möglichst niedrig ist, um die Verlustleistung zu minimieren.

Diese Aufgabe wird durch eine Synchrongleichrichterschaltung mit den Merkmalen von Anspruch 1 gelöst.

Die Erfindung sieht in einer Synchrongleichrichterschaltung mit Stromwandler gemäß der oben beschriebenen Bauart insbesondere vor, den Stromwandler-Transformator so auszubilden, daß er eine erste und eine zweite Sekundärwicklung aufweist, um den zugehörigen MOSFET in zwei Stufen anzusteuern. Die erste Sekundärwicklung erzeugt eine relativ hohe und die zweite Sekundärwicklung erzeugt eine relativ niedrige Stromverstärkung. Die erste Sekundärwicklung kann somit für das schnelle Einschalten des MOSFET verwendet werden, wobei die Gate-Kapazität des MOSFET durch den relativ hohen Einschaltstrom schnell geladen wird. In der zweiten Stufe wird der eingeschaltete MOSFET mit relativ niedriger Stromverstärkung in dem eingeschalteten Zustand gehalten, wofür ein kleinerer Strom notwendig ist. Dadurch kann der MOSFET schnell angesteuert werden und nach dem Einschalten verlustarm in seinem Schalt-Zustand gehalten werden.

In der bevorzugten Ausführungsform der Erfindung werden also elektronische Schalter der Synchrongleichrichterschaltung MOSFET-Transistoren vorgesehen. Die Erfindung ist deshalb im Kontext solcher MOSFETs beschrieben. Die elektronischen Schalter können jedoch auch durch bipolare Transistoren oder andere geeignete Schalter realisiert werden.

Zusätzlich sieht die Erfindung zum Zurücksetzen der Sekundärseite 42b des Stromwandlers 42 eine Transkonduktordrossel vor, welche das Zurücksetzen bzw. Entmagnetisieren des Stromwandlers 42 nach dem Schaltvorgang unterstützt.

Während Transkonduktordrosseln im Stand der Technik grundsätzlich bekannt sind, wurden sie bisher weder in Synchrongleichrichtern noch zum Zurücksetzen eines Stromwandlers eingesetzt. Durch die besondere Beschaltung der Sekundärseite des Stromwandlers mit der Transkonduktordrossel läßt sich der Rücksetzvorgang des Stromwandlers deutlich verkürzen, so daß die Freilaufphase kürzer gewählt werden kann. Dies bringt den Vorteil mit sich, daß der Gegentaktwandler insgesamt mit einer höheren Frequenz betrieben und/oder im Sinne einer größeren Variabilität des Tastverhältnisses besser ausgenutzt werden kann. Abhängig von der zu übertragenen Energie kann bei Verkürzung der Freilaufphase das Tastverhältnis des Wandlers flexibler eingestellt werden. Auch der Wirkungsgrad wird durch eine Verkürzung der Freilaufphase erhöht

Bevorzugte Ausführungsfbrmen der Erfindung sind in den abhängigen Ansprüchen angegeben.

Die Erfindung ist im folgenden anhand einer bevorzugten Ausführungsform mit Bezug auf die Zeichnungen näher erläutert. In den Figuren zeigt:

Fig. 1 ein Blockdiagramm einer Gegentaktwandlerschaltung, in der die Erfindung eingesetzt werden kann;

Fig. 2 zeigt ein schematisches Schaltbild eines Gegentaktwandlers mit Dioden-Gleichrichter;

Fig. 3 zeigt idealisierte Wellenformen der Ausgangsspannungen und -ströme des Gegentaktwandlers der Fig. 2;

Fig. 4 zeigt ein Ersatzschaltbild eines MOSFET, der anstelle der Dioden in Fig. 2 eingesetzt werden kann;

Fig. 5 zeigt in Form eines Blockdiagramms den Ersatz des Dioden-Gleichrichters der Fig. 1 durch einen Synchrongleichrichter mit MOSFET;

Fig. 6 zeigt ein schematisches Schaltbild der Sekundärseite eines selbstgesteuerten Synchrongleichrichters;

Fig. 7 zeigt ein schematisches Schaltbild der Sekundärseite eines IC-gesteuerten Synchrongleichrichters;

Fig. 8 zeigt ein schematisches Schaltbild der oberen Hälfte der Sekundärseite eines Synchrongleichrichters mit Stromwandler, wobei die untere Hüfte spiegelbildlich hierzu ist;

Fig. 9 zeigt ein schematisches Schaltbild der oberen Hälfte der Sekundärseite einer Synchrongleichrichterschaltung gemäß der Erfindung, wobei die untere Hälfte spiegelbildlich hierzu ist;

Fig. 10 zeigt ein schematisches Schaltbild des oberen Teils der Sekundärseite der Synchrongleichrichterschaltung gemäß der Erfindung, das ähnlich ist wie das Schaltbild der Fig. 9, mit weiteren Einzelheiten in einer ersten Betriebsphase;

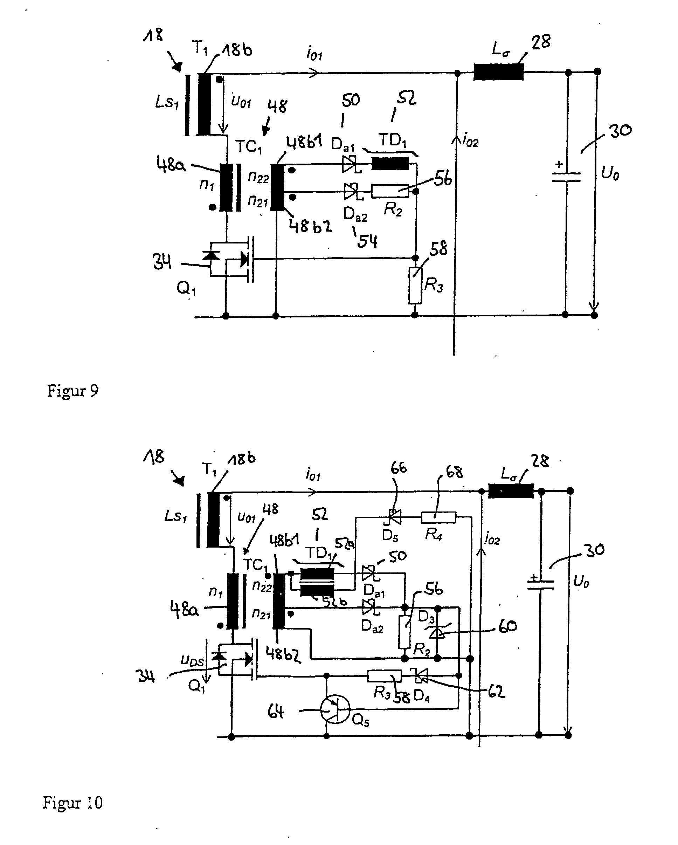

Fig. 1 1 zeigt ein ähnliches Schaltbild wie Fig. 10 in einer zweiten Betriebsphase;

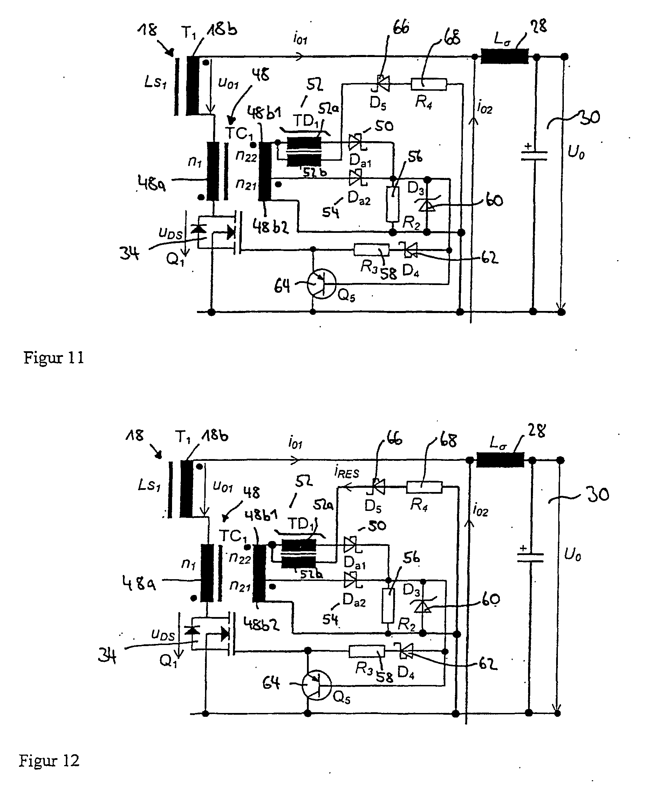

Fig. 12 zeigt ein ähnliches Schaltbild wie Fig. 10 und 11 in einer dritten Betriebsphase;

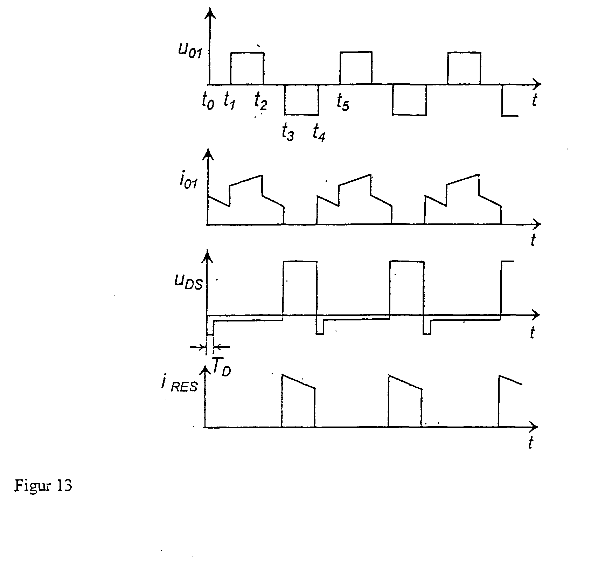

Fig. 13 zeigt idealisierte Wellenformen der Ausgangsspannungen und -ströme der Synchrongleichrichterschaltung der Fig. 10 bis 12.

Fig. 9 zeigt ein Schaltbild des oberen Teils der Sekundärseite des Synchrongleichrichters gemäß der Erfindung. Der untere Teil der Sekundärseite ist spiegelbildlich hierzu; die Primärseite kann wie im Stand der Technik aufgebaut sein.

Entsprechende Bauteile wie in den Schaltungen der Fig. 6 bis 8 sind mit denselben Bezugszeichen bezeichnet.

Die erfindungsgemäße Synchrongleichrichterschaltung umfaßt auf ihrer Sekundärseite einen ersten sekundären Wicklungsabschnitt $Ls_1$ des Leistungstransformators 18, der mit einem Stromwandlertransformator 48 und einem Leistungs-MOSFET 34 in Reihe geschaltet ist. Der Stromwandlertransformator 48 umfaßt eine Primärwicklung 48a und eine Sekundärwicklung 48b, die in zwei Wicklungsabschnitte 48b1, 48b2 aufgeteilt ist. Der erste Sekundärwicklungsabschnitt 48b1 ist mit einem ersten Zweig verbunden, der bei der in Fig. 8 gezeigten Ausführungsform eine Diode 50 und eine Transkonduktordrossel 52 enthält, und der zweite Sekundärwicklungsabschnitt 48b2 ist mit einem zweiten Zweig verbunden, der eine Diode 54 und einen Widerstand 56 enthält. Die Transkonduktordrossel 52 ist im Stand der Technik auch als "magnetic amplifier" oder "mag amp" bekannt.

Der erste und der zweite Zweig sind über einen weiteren Widerstand 58 mit einem gemeinsamen Bezugspotential der Synchrongleichrichterschaltung verbunden.

Am Ausgang der Synchrongleichrichterschaltung sind, wie beim Stand der Technik, eine Speicherdrossel 28 und ein Speicherkondensator 30, wie in Fig. 8 gezeigt, zur Bildung einer Ausgangsfilterstufe vorgesehen.

Die Funktion der erfindungsgemäße Synchrongleichrichterschaltung basiert grundsätzlich auf dem im folgenden beschriebenen Schaltungsverhalten: zum Einschalten des MOSFET 34 wird ein relativ hoher Strom über den zweiten Sekundärwicklungsabschnitt 48b2 erzeugt, wobei gleichzeitig ein relativ niedriger Strom durch den ersten Sekundärwicklungsabschnitt 48b1 und den ersten Zweig mit der Transkonduktordrossel 52 fließt. Hierzu wird das Wicklungsverhältnis des ersten und zweiten Sekundärwicklungsabschnitt 48b1, 48b2 zu der Primärwicklung 48a geeignet gewählt. Insbesondere wird ein niedriges Wicklungsverhältnis $n_{21}/n_1$ in der Größenordnung von 10:1 des zweiten Sekundärwicklungsabschnitts 48b2 zur Primärwicklung 48a gewählt, um einen hohen Schaltstrom zu erzeugen und den MOSFET 34 sehr schnell einzuschalten. Ein hohes Wicklungsverhältnis $n_{22}/n_1$ in der Größenordnung von 100:1 des ersten Sekundärwicklungsabschnitts 48b1 zu der Primärwicklung 48a und die hohe Induktivität der Transkonduktordrossel erzeugen dann eine langsame Stromzunahme in dem ersten Zweig, wobei mit zunehmendem Strom die Induktivität der Transkonduktordrossel 52 abnimmt - die Transkonduktordrossel 52 ist "eingeschaltet" - und dadurch der Strom durch den Widerstand 56 wieder sehr klein wird.

Diesem Schaltverhalten liegt die Eigenschaft der Transkonduktordrossel 52 zugrunde, daß diese bei niedrigem Strom eine hohe Induktivität hat und wie ein geöffneter Schalter wirkt und bei zunehmendem Strom die Induktivität abnimmt, bis sie wie ein geschlossener Schalter wirkt. Dieses Schaltverhalten wird von der Erfindung vorteilhaft ausgenutzt.

In der Praxis ist das Abschaltverhalten des Schaltkreises etwas komplizierter als bei den anderen oben beschriebenen Fällen. Deshalb sind in der praktischen Realisierung einige zusätzliche Komponenten in Verbindung mit einer nicht idealen Transkonduktordrossel notwendig oder vorteilhaft, wie im folgenden beschrieben ist.

Fig. 10 bis 12 zeigen detaillierte Schaltpläne der Synchrongleichrichterschaltung gemäß der Erfindung. Hauptbestandteil des Sekundärgleichrichters sind nach wie vor der Stromwandler 48 und der MOSFET 34, wobei der Stromwandler 48 einen ersten Ausgangszweig mit der Transkonduktordrossel 52 und der Diode 50 und einen zweiten Ausgangszweig mit der Diode 54 und dem Widerstand 56 aufweist. Zusätzlich zu der Schaltung der Fig. 9 ist in den Fig. 10 bis 12 eine Diode 60 gezeigt, die zu dem Widerstand 56 parallel geschaltet ist, sowie eine weitere Diode 62, die zu dem Widerstand 58 in Reihe geschaltet ist. Der erste und der zweite Zweig verbinden die Sekundärwicklung 48b des Stromwandlers 48 über die Diode 62 und den Widerstand 58 sowie über einen hierzu parallel geschalteten Transistor 64, insbesondere ein bipolarer PNP-Transistor, mit dem Gate des MOSFET 34.

Weiterhin ist in den Fig. 10 bis 12 die Transkonduktordrossel 52 mit einer ersten Wicklung 52a in dem ersten Zweig sowie mit einer zweiten Wicklung 52b dargestellt, die mit einer Diode 66 und einem Widerstand 68 in Reihe geschaltet ist, wobei diese Reiheschaltung zu dem ersten und dem zweiten Zweig parallel geschaltet ist, wie in den Fig. 10 bis 12 gezeigt.

Der Betrieb der erfindungsgemäßen Synchrongleichrichterschaltung der Fig. 10 bis 12 ist mit Bezug auf die in Fig. 13 dargestellten Wellenformen im folgenden näher erläutert. Die idealisierten Wellenformen der Fig. 13 zeigen die Ausgangsspannung $u_{01}$ des oberen Wicklungsabschnitts $Ls_1$ der Sekundärseite 18b des Leistungstransformators 18, den Ausgangsstrom $i_{01}$ dieses Wicklungsabschnittes $Ls_1$, die Drain-Source-Spannung $u_{DS}$ des MOSFET 34 sowie den Rücksetzstrom $i_{RES}$ (s. Fig. 12) zum Zurücksetzen des Stromwandlertransformators 48 und der Transduktordrossel 52.

Während des Zeitintervalls $t_0$ bis $t_1$ (s. Fig. 13) ist die Ausgangsspannung $u_{01}$ Null. In dieser Phase, die der Freilaufphase entspricht, sind beide MOSFET-Schalter 34, 36 (in den Fig. nicht dargestellt, jedoch spiegelsymmetrisch zu der Darstellung der Fig. 10 bis 12) leitend.

Zum Zeitpunkt $t_0$ fließt der Strom $i_{01}$ durch die Inversdiode des MOSFET 34 (Fig. 10) und den Stromwandler 48. Entsprechend fließt ein Strom durch die Diode 54 und beginnt das Laden der Eingangskapazität des MOSFET 34. Dieser Strom ist in erster Linie abhängig von dem Wicklungsverhältnis $n_{21}/n_1$ des zweiten Sekundärwicklungsabschnitts 48b2 zur Primärwicklung 48a des Stromwandlertransformators 48 sowie von der Last.

Während des ersten Zeitintervalls $T_D$ (s. Fig. 13) fließt auch ein vemachlässigbar kleiner Strom durch die Transkonduktordrossel 52. Das Wicklungsverhältnis $n_{22}/n_1$ des zweiten Sekundärwicklungsabschnitts 48b2 zu der Primärwicklung 48a des Stromwandlertransformators 48, die Transkonduktordrossel 52 selbst sowie die Last beeinflussen das Einschaltverhalten des MOSFET 34 (s. Fig. 11). Das Wicklungsverhältnis $n_{22}/n_1$ muß abhängig von der Transkonduktordrossel 52 derart gewählt werden, daß die Ansteuerverluste minimiert werden. Am Ende des Zeitintervalls $T_D$ ist die Transkonduktordrossel 52 gesättigt und der MOSFET 34 ist vollständig eingeschaltet (s. Fig. 13).

Die Diode 60 und der Widerstand 56 bestimmen die Höhe der Gate-Source-Spannung des MOSFET 34. Der Widerstand 58 dient zum Dämpfen von Schwingungen in dem Gatekreis.

Zum Zeitpunkt $t_1$ bleibt der MOSFET 34 leitend, während der weitere MOSFET 36 (in den Fig. nicht gezeigt) abschaltet. Der gesamte Ausgangsstrom fließt somit durch den MOSFET 34.

Während der Freilaufphase, im Zeitintervall von $t_2$ bis $t_3$, ist das Verhalten des Schaltkreises entsprechend wie oben beschrieben. Beginnend mit dem Zeitpunkt $t_3$ wird die Spannung $u_{01}$ über dem Sekundärwicklungsabschnitt $Ls_1$ negativ. Dies führt zu einer Abnahme des Stromes durch den MOSFET 34. Dadurch werden die Spannungen über den Sekundärwicklungsabschnitten 48b1 und 48b2 des Stromwandlertransformators 48 umgekehrt, der Transistor 64 wird leitend und beschleunigt das Abschalten des MOSFET 34.

Die negativen Spannungen an den Sekundärwicklungsabschnitten 48b1, 48b2 des Stromwandlers 48 starten den Rücksetzprozeß der Transkonduktordrossel 52. Ein Rücksetzstrom $i_{RES}$ fließt durch den Widerstand 68 und die Diode 66 und setzt den Stromwandler 48 und die Transkonduktordrossel 52 zurück (s. Fig. 12).

Der Widerstand 68 begrenzt den Rücksetzstrom. Die Diode 66 stellt sicher, daß ein Strom nur während dieses Zeitintervalls fließt. Spätestens zum Zeitpunkt $t_4$, mit dem Beginn der Freilaufphase, fließt kein Rücksetzstrom $i_{RES}$ mehr.

Sofern beim Einschalten des Synchrongleichrichters beide MOSFET 34, 36 nicht leitend sind, übernehmen die jeweiligen Inversdiöden dann, wenn ein Strom durch die Sekundärwicklung 18b des Leistungstransformators 18 zu fließen beginnt, den Stromfluß.

Gleichzeitig fließt auch ein Strom durch die Primärwicklung 48a des Stromwandlertransformators 48 und somit durch den ersten und den zweiten Sekundärwicklungsabschnitt 48b1, 48b2. Die Transkonduktordrossel 52 verhindert einen Stromfluß durch den ersten Zweig, es fließt jedoch einen Strom durch die Diode 54 des zweiten Zweiges, der zum Laden der Gatekapazitäten der MOSFET 34, 36 dient. Durch das kleine Übersetzungsverhältnis, in der Größenordnung von 10 zu 1, des zweiten Sekundärwicklungsabschnitts 48b2 zur Primärwicklung 48a des Stromwandlertransformators 48 wird ein relativ großer Schaltstrom erzeugt und das Ansteuern des MOSFET 34, 36 extrem beschleunigt. Dieses schnelle Laden verkürzt wiederum die Zeit des Stromflusses über die Inversdioden. Wird die Schwellwertspannung des MOSFET 34, 36 erreicht, wird dieser leitend; hierbei dienen die Widerstände 56, 58 der Strombegrenzung und die Diode 60 der Spannungsbegrenzung. Der Transistor 24 ist zu diesem Zeitpunkt gesperrt. Wie beschrieben, ist während dieser ersten Einschaltphase auch die Transkonduktordrossel 52 gesperrt.

Die Transkonduktordrossel 52 wirkt in diesem Schaltkreis als ein magnetischer Schalter; erst nach einer gewissen Ladezeit geht die Transkonduktordrossel 52 in die Sättigung, was einem geschlossenen Schalterzustand entspricht, so daß über die Diode 50 die Gatekapazität des MOSFET 34,36 vollständig geladen und somit der Synchrongleichrichter vollständig ausgesteuert wird. Durch die Wahl eines größeren Übersetzungsverhältnisses, in der Größenordnung von 1 zu 100, zwischen der Primärwicklung 48a und dem ersten Sekundärwicklungsabschnitt 48b1 des Stromwandlertransformators 48 ergibt sich ein kleinerer Ladestrom und somit geringerer Ansteuerverluste des Synchrongleichrichters.

Wie bereits erwähnt, ist ein vorteilhaftes Merkmal der Erfindung, daß die Transkonduktordrossel 52 und der Stromwandlertransformator 48 nach einem Schaltvorgang schnell und einfach wieder zurückgesetzt bzw. entmagnetisiert werden können. Zu diesem Zweck ist, wie in den Fig. 10 bis 12 gezeigt, an der Transkonduktordrossel eine zweite Wicklung 52b, beispielsweise mit vier Windungen, vorgesehen. Ihr Wicklungssinn ist der ersten Wicklung 52a der Transkonduktordrossel entgegengesetzt. Gespeist wird diese zweite Wicklung 52b über den Widerstand 68, welcher der Strombegrenzung dient, und die Diode 66, die einen Stromfluß in umgekehrter Richtung verhindert. Der Rücksetzvorgang der Transkonduktordrossel 52 und des Stromwandlertransformators 48 erfolgt jeweils während der Sperrphase der MOSFET 34, 36. In diesem Zeitabschnitt ist die Spannung an dem zugehörigen Wicklungsabschnitt auf der Sekundärseite 18b des Leistungstransformators 18 negativ. Aufgrund dieses negativen Potentials kommt es zu einem Stromfluß über den Widerstand 68, die Diode 66, die Transkonduktordrossel 52 und die Sekundärwicklung 48b des Stromwandlertransformators 48. Die Spannung auf der Sekundärseite des Stromwandlers springt auf ein negatives Potential; durch den anschließenden abklingenden Stromfluß werden Stromwandler und Transkonduktordrossel in Gegenrichtung magnetisiert. Geht die Spannung auf der Sekundärseite, z.B. Ls$_1$, des Leistungstransformators 18 wieder auf 0 Volt (Freilaufphase), bricht der Rücksetzstrom i$_{RES}$ (Fig. 13) ab. Beide Induktivitäten, der Transkonduktordrossel 52 und des Stromwandlertransformators 48, sind nach diesem Vorgang entmagnetisiert und für den nächsten Schaltvorgang vorbereitet.

Für die Auswahl und Dimensionierung der verschiedenen Bauteile in der erfindungsgemäßen Synchrongleichrichterschaltung können die folgenden Richtlinien gelten:

Die Auswahl der Leistungstransistoren, MOSFET, erfolgt in erster Linie im Hinblick auf einen niedrigen Durchlaßwiderstand, vorzugsweise mit einem Durchlaßwiderstand R$_{DS}$ < 50 mΩ, einer Drain-Source-Spannung und einem Drain-Strom abhängig von der gewünschten Ausgangsspannung und dem Ausgangsstrom.

Das optimale Übersetzungsverhältnis des Stromwandlertransformators sollte je nach Anwendungsfall experimentell ermittelt werden, wobei in Tests Wicklungsverhältnisse von Primärwicklung 48a zu erstem Sekundärwicklungsabschnitt 48b1 zu zweitem Sekundärwicklungsabschnitt 48b2 von 1:50:5 und 1:100:10 in dieser Konfiguration gute Ergebnisse lieferten.

Die Transkonduktordrossel 52 übernimmt in der Gleichrichterschaltung eine Schalterfunktion. Sie ist dafür verantwortlich, daß nach einer gewissen Zeit T$_D$ eine zweite Stufe der Ansteuerung der MOSFET erfolgt, wie beschrieben.

Eine Transkonduktordrossel besteht im wesentlichen aus einem sättigbaren, weichmagnetischen Ringkern mit einer oder mehreren Wicklungen. Die Hysteresekurve des Kerns ist nahezu rechteckig. Je nach Magnetisierungsgrad der Drossel ist der magnetische Schalter ein oder aus. Im folgenden ist das Verhalten einer Transkonduktordrossel kurz erläutert. Wird eine Spannung an die Drossel angelegt, ist die Induktivität der Drossel im ersten Moment sehr groß und es fließt kein Strom durch die Spule. Nach Verstreichen einer Zeit T$_D$ geht die Drossel in die Sättigung und hat dann eine sehr kleine Induktivität. In diesem Zustand fließt Strom durch die Wicklung der Transkonduktordrossel, der magnetische Schalter ist geschlossen. Während dieses Stromflusses bleibt die magnetische Flußdichte nahezu konstant. Bricht der Stromfluß durch die Drossel ab, nimmt die magnetische Feldstärke ab, die magnetische Flußdichte bleibt nach wie vor konstant. Fließt nun ein Strom in Gegenrichtung (Rücksetzstrom) oder wird eine negative Spannung angelegt, verringert sich die Induktivität der Drossel und geht gegen Null, so daß die Transkonduktordrossel entmagnetisiert wird. Fließt der Rücksetzstrom lang genug, ist die Transkonduktordrossel vollständig entmagnetisiert und somit zurückgesetzt. Sofern der Rücksetzstrom weiterfließt, wird die Transkonduktordrossel in die Gegenrichtung magnetisiert und der magnetische Schalter ist wieder geöffnet.

Die Funktion einzelner weiterer Bauteile ist wie folgt.

Die Dioden 50, 54 und 58 verhindern das Fließen eines Rückstroms während der Sperrphase der MOSFET 34, 36. Es können beispielsweise Shottky-Dioden gewählt werden, die aufgrund einer kleinen Durchlaßspannung relativ verlustarm sind und relativ große Ströme erlauben.

Der Widerstand 56 und die Zenerdiode 60 dienen zum Einstellen der Gate-Source-Spannung. Der Widerstand 58 dient als ein Gate-Widerstand zur Unterdrückung von Schwingungen. Durch die Anordnung des Widerstands 58 vor dem Transistor 64 wird ferner das Ausschalten des MOSFET 34 verkürzt, so daß sich der Wirkungsgrad der Gesamtschaltung nochmals verbessert. Der Transistor 64 dient zur Entladung der Gatekapazität der MOSFET 34, 36. Der Widerstand 68 und die Diode 66 dienen zum Entmagnetisieren der Transkonduktordrossel 52 und des Stromwandlers 48.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungsformen von Bedeutung sein.

Die Erfindung schafft einen Synchrongleichrichter zur Verwendung in einem Gegentaktwandler mit besonders hohem Wirkungsgrad und schnellen Schalteigenschaften. Dadurch ist es einerseits möglich, die erfindungsgemäße Schaltung insbesondere auch in mehrstufigen Schaltnetzteilen einzusetzen, gleichzeitig aber auch ein Schaltnetzteil zu erhalten, das mit hoher Frequenz arbeitet und/oder flexibel in bezug auf das Tastverhältnis ist. Die Erfindung ist insbesondere vorteilhaft für Schaltnetzteile mit niedriger Ausgangsspannung, beispielsweise < 24 V, bei denen die Verluste eines Diodengleichrichters besonders erheblich sind. Beispielhafte Anwendungen sind Schaltnetzteile für Telekomanlagen, Computer sowie industrielle Anwendungen, Spannungsversorgung für Prozessorkeme und insbesondere all solche Anwendungen, die niedrige Spannungen und hohe Ströme verlangen.

Bezugszeichenliste

| | |
|---|---|
| 10 | Eingangsschaltstufe |
| 12 | Leistungstransformator |
| 14 | Gleichrichterschaltung |
| 16 | Ausgangsfilter |
| 18 | Leistungstransformator |
| 18a | Primärseite des Leistungstransformators |
| 18b | Sekundärseite des Leistungstransformators |

| 20 | Leistungstransistor |
|---|---|
| 22 | Leistungstransistor |
| 24 | sekundäre Diode |
| 26 | sekundäre Diode |
| 28 | Speicherdrossel |
| 30 | Speicherkondensator |
| 32 | Synchrongleichrichterschaltung |
| 34 | MOSFET, elektronischer Schalter |
| 36 | MOSFET, elektronischer Schalter |
| 38 | Ansteuer-IC |
| 40 | Ansteuer-IC |
| 42 | Stromwandler |
| 42a | Primärwicklung des Stromwandlers |
| 42b | Sekundärwicklung des Stromwandlers |
| 44 | Widerstand |
| 46 | Widerstand |
| 48 | Stromwandlertransformator |
| 48a | Primärwicklung des Stromwandlertransformators |
| 48b | Sekundärwicklung des Stromwandlertransformators |
| 48b1 | erster Sekundärwicklungsabschnitt |
| 48b2 | zweiter Sekundärwicklungsabschnitt |
| 50 | Diode |
| 52 | Transkonduktordrossel |
| 52a | erste Wicklung der Transkonduktordrossel |
| 52b | zweite Wicklung der Transkonduktordrossel |
| 54 | Diode |
| 56 | Widerstand |
| 58 | Widerstand |
| 60 | Diode |
| 62 | Diode |
| 64 | Transistor |
| 66 | Diode |
| 68 | Widerstand |

## Patentansprüche

1. Synchrongleichrichterschaltung mit einem Leistungstransformator (12; 18), der eine Primärseite (18a) mit einem ersten und einem zweiten primären Wicklungsabschnitt und eine Sekundärseite (18b) mit einem ersten und einem zweiten sekundären Wicklungsabschnitt aufweist, einer Gleichrichterschaltung (32) auf der Sekundärseite des Leistungstransformators (12; 18), wobei die Gleichrichterschaltung einen ersten und einen zweiten elektronischen Schalter (34, 36) aufweist, die dem ersten bzw. dem zweiten sekundären Wicklungsabschnitt (18b) zugeordnet sind, einer ersten und einer zweiten Stromwandlereinrichtung (48), die dem ersten bzw. dem zweiten sekundären Wicklungsabschnitt zugeordnet sind, und einer ersten und einer zweiten Ansteuerschaltung (50-58) für den ersten bzw. den zweiten elektronischen Schalter (34, 36), wobei jede Stromwandlereinrichtung (48) einen ersten und einen zweiten Strom erzeugt, die abhängig sind von dem Strom des zugehörigen sekundären Wicklungsabschnittes (18b) des Leistungstransformators (18), und jede Ansteuerschaltung (50-58) einen ersten Zweig (50, 52) und einen zweiten Zweig (54, 56) aufweist, die den ersten bzw. den zweiten von der Stromwandlervorrichtung (48) erzeugten Strom empfangen, und wobei der erste Zweig eine Transkonduktordrossel (52) aufweist.

2. Synchrongleichrichterschaltung nach Anspruch 1, **dadurch gekennzeichnet, daß** jede Stromwandlereinrichtung einen Stromwandlertransformator (48) mit einer Primärwicklung (48a) und einer ersten und einer zweiten Sekundärwicklung (48b) aufweist, wobei der erste und der zweite Zweig der Ansteuerschaltung der ersten bzw. der zweiten Sekundärwicklung des Stromwandlertransformators (48) zugeordnet sind.

3. Synchrongleichrichterschaltung nach Anspruch 2, **dadurch gekennzeichnet, daß** die elektronischen Schalter (34, 36) jeweils einen MOSFET aufweisen.

4. Synchrongleichrichterschaltung nach Anspruch 2 oder 3, dadurch **gekennzeich**n e t, daß die Primärwicklung (48a) der ersten Stromwandlereinrichtung (48) zu dem ersten sekundären Wicklungsabschnitt (18b) des Leistungstransistors (18) in Reihe geschaltet ist und die Primärwicklung der zweiten Stromwandlereinrichtung zu dem zweiten sekundären Wicklungsabschnitt des Leistungstransistors (18) in Reihe geschaltet ist.

5. Synchrongleichrichterschaltung nach Anspruch 3 oder 4, dadurch **gekennzeich**n e t, daß der erste Schalter (34) zu dem ersten sekundären Wicklungsabschnitt (18b) des Leistungstransistors (18) in Reihe geschaltet ist und der zweite Schalter (36) zu dem zweiten sekundären Wicklungsabschnitt (18b) des Leistungstransistors (18) in Reihe geschaltet ist.

6. Synchrongleichrichterschaltung nach einem der Ansprüche 3 bis 5, **dadurch gekennzeichnet, daß** der erste Zweig die erste Sekundärwicklung (48b1) des Stromwandlertransformators (48) über eine Diode (50) und die Transkonduktordrossel (52) mit dem Gate des zugehörigen MOSFET (34) verbindet und der zweite Zweig die zweite Sekundärwicklung (48b2) des Stromwandlertransformators (48) über eine Diode (56) mit dem Gate des zugehörigen MOSFET (34) verbindet.

7. Synchrongleichrichterschaltung nach Anspruch 6, **dadurch gekennzeichnet, daß** der erste und der zweite Zweig über ein Schaltelement (64) mit dem Gate des zugehörigen MOSFET (34) verbunden sind.

8. Synchrongleichrichterschaltung nach Anspruch 7, **dadurch gekennzeichnet, daß** das Schaltelement (64) ein bipolarer Transistor ist.

9. Synchrongleichrichterschaltung nach einem der Ansprüche 2 bis 8, **dadurch gekennzeichnet, daß** die erste Sekundärwicklung (48b1) des Stromwandlertransformators (48) eine höhere Wicklungszahl als die zweite Sekundärwicklung (48b2) des Stromwandlertransformators (48) hat.

10. Synchrongleichrichterschaltung nach Anspruch 9, **dadurch gekennzeichnet, daß** das Wicklungsverhältnis ($n_1$:$n_{22}$:$n_{21}$) von Primärwicklung (48a) zu erster Sekundärwicklung (48b1) zu zweiter Sekundärwicklung (48b2) des Stromwandlertransformators (48) in der Größenordnung von 1:100:10 ist.

11. Synchrongleichrichterschaltung nach einem der vorangehenden Ansprüche, **dadurch gekennzeichnet, daß** die Transkonduktordrossel (52) eine Schaltwicklung (52a) und eine Rücksetzwicklung (52b) aufweist, wobei die Schaltwicklung (52a) in dem ersten Zweig liegt und die Rücksetzwicklung (52b) in einem zu diesem parallelen Rücksetzzweig liegt.

12. Synchrongleichrichterschaltung nach Anspruch 11, **dadurch gekennzeichnet, daß** das Wicklungsverhältnis von Schaltwicklung (52a) zu Rücksetzwicklung (52b) in der Größenordnung von 1:4 ist.

13. Synchrongleichrichterschaltung nach Anspruch 12, **dadurch gekennzeichnet, daß** der Rücksetzzweig eine Diode (66) enthält.

14. Synchrongleichrichterschaltung nach einem der vorangehenden Ansprüche, **dadurch gekennzeichnet, daß** dem Leistungstransformator (18) eine Eingangsschaltstufe (10) vorgeschaltet ist.

15. Synchrongleichrichterschaltung nach einem der vorangehenden Ansprüche, **dadurch gekennzeichnet, daß** der Gleichrichterschaltung (32) eine Ausgangsfilterstufe (16) nachgeschaltet ist.

16. Gegentaktwandler mit einer Synchrongleichrichterschaltung nach einem der vorangehenden Ansprüche.

**Claims**

1. A synchronous rectifier circuit, comprising a power transformer (12; 18) which has a primary side (18a) including first and second primary winding sections and a secondary side (18b) including first and second secondary winding sections, a rectifier circuit (32) at the secondary side of the power transformer (12; 18), which rectifier circuit comprises first and second electronic switches (34, 36) associated with the first and second secondary winding sections (18b), respectively, first and second current transforming means (48) associated with the first and second secondary winding sections, respectively, and first and second drive circuits (50 - 58) for the first and second electronic switches (34, 36), respectively, each current transforming means (48) generating first and second currents which are dependent on the current of the associated secondary winding section (18b) of the power transformer (18), and each drive circuit (50 - 58) comprising a first branch (50, 52) and a second branch (54, 56) to receive the first and second currents, respectively, generated by the current transforming device (48), and the first branch comprising a transconductance choke (52).

2. The synchronous rectifier circuit as claimed in claim 1, **characterized in that** each current transforming means comprises a converter-type current transformer (48) including a primary winding (48a) and first and second secondary windings (48b), teh first and second branches of the drive circuit being associated with the first and second secondary windings, respectively, of the converter-type current transformer (48).

3. The synchronous rectifier circuit as claimed in claim 2, **characterized in that** the electronic switches (34, 36) each comprise a MOSFET.

4. The synchronous rectifier circuit as claimed in claim 2 or 3, **characterized in that** the primary winding (48a) of the first current transforming means (48) is connected in series to the first secondary winding section (18b) of the power transformer (18) and the primary winding of the second current transforming means is connected in series to the second secondary winding section of the power transformer (18).

5. The synchronous rectifier circuit as claimed in claim 3 or 4, **characterized in that** the first switch (34) is connected in series to the first secondary winding section (18b) of the power transformer (18) and the second switch (36) is connected in series to the second secondary winding section (18b) of the power transformer (18).

6. The synchronous rectifier circuit as claimed in any one of claims 3 to 5, **characterized in that** the first branch connects the first secondary winding (48b1) of the converter-type current transformer (48) via a diode (50) and the transconductance choke (52) to the gate of the associated MOSFET (34), and the second branch connects the second secondary winding (48b2) of the converter-type current transformer (48) via a diode (56) to the gate of the associated MOSFET (34).

7. The synchronous rectifier circuit as claimed in claim 6, **characterized in that** the first and second branches are connected to the gate of the associated MOSFET (34) through a switching element (64).

8. The synchronous rectifier circuit as claimed in claim 7, **characterized in that** the switching element (64) is a bipolar transistor.

9. The synchronous rectifier circuit as claimed in any one of claims 2 to 8, **characterized in that** the first secondary winding (48b1) of the converter-type current transformer (48) has a greater number of windings than the second secondary winding (48b2) of the converter-type current transformer (48).

10. The synchronous rectifier circuit as claimed in claim 9, **characterized in that** the winding ratio (n1:n22: n21) of the primary winding (48a) to the first secondary winding (48b1) to the second secondary winding (48b2) of the converter-type current transformer (48) is in the order of 1:100:10.

11. The synchronous rectifier circuit as claimed in any one of the preceding claims, **characterized in that** the transconductance choke (52) comprises a switch winding (52a) and a reset winding (52b), the switch winding (52a) being disposed in the first branch and the reset winding (52b) being disposed in a reset branch parallel to said first branch.

12. The synchronous rectifier circuit as claimed in claim 11, **characterized in that** the winding ratio of the switch winding (52a) to the reset winding (52b) lies in the order of 1:4.

13. The synchronous rectifier circuit as claimed in claim 12, **characterized in that** the reset branch includes a second diode (66).

14. The synchronous rectifier circuit as claimed in any one of the preceding claims, **characterized in that** an input switching stage (10) is connected upstream of the power transformer (18).

15. The synchronous rectifier circuit as claimed in any one of the preceding claims, **characterized in that** an output filter stage (16) is connected downstream of the rectifier circuit (32).

16. A push-pull transformer comprising a synchronous rectifier circuit as claimed in any one of the preceding claims.

**Revendications**

1. Circuit redresseur synchrone avec un transformateur de puissance (12 ; 18) qui comprend un côté primaire (18a) avec une première et une deuxième partie d'enroulement primaire et un côté secondaire (18b) avec une première et une deuxième partie d'enroulement secondaire, un circuit redresseur (32) du côté secondaire du transformateur de puissance (12 ; 18), moyennant quoi le circuit redresseur comprend un premier et un deuxième interrupteur électronique (34, 36) qui correspondent respectivement à la première et à la deuxième partie d'enroulement secondaire (18b), un premier et un deuxième dispositif convertisseur de courant (48) qui correspondent respectivement à la première et à la deuxième partie d'enroulement secondaire, et un premier et un deuxième circuit de commande (50, 58) respectivement pour le premier et le deuxième interrupteur (34, 36), moyennant quoi chaque dispositif convertisseur de courant (48) génère un premier et un deuxième courant qui sont indépendants du courant de la partie d'enroulement secondaire correspondante (18b) du transformateur de puissance (18) et chaque circuit de commande (50, 58) comprend un premier embranchement (50, 52) et un deuxième embranchement (54, 56) qui reçoivent le premier et le deuxième courants générés par le dispositif convertisseur de courant (48), et moyennant quoi le premier embranchement comprend une bobine d'induction de transducteur magnétique (52).

2. Circuit redresseur synchrone selon la revendication 1, **caractérisé en ce que** chaque dispositif convertisseur de courant comprend un transformateur de convertisseur de courant (48) avec un enroulement primaire (48a) et un premier et un deuxième enroulement secondaire (48b), moyennant quoi le premier et le deuxième embranchement du circuit de commande correspondant respectivement au premier ou au deuxième enroulement secondaire du transformateur du convertisseur de courant (48).

3. Circuit redresseur synchrone.selon la revendication 2, **caractérisé en ce que** les interrupteurs électroniques (34, 36) comprennent chacun un MOSFET.

4. Circuit redresseur synchrone selon la revendication 2 ou 3, **caractérisé en ce que** l'enroulement primaire (48a) du premier dispositif convertisseur de courant (48) est branché en série avec la première partie d'enroulement secondaire (18b) du transistor de puissance (18) et l'enroulement primaire du deuxième dispositif convertisseur de courant est relié en série avec la deuxième partie d'enroulement secondaire du transistor de puissance (18).

**5.** Circuit redresseur synchrone selon la revendication 3 ou 4, **caractérisé en ce que** le premier interrupteur (34) est branché en série avec la première partie d'enroulement secondaire (18b) du transistor de puissance (18) et le deuxième interrupteur (36) est branché en série avec la deuxième partie d'enroulement secondaire (18b) du transistor de puissance (18).

**6.** Circuit redresseur synchrone selon l'une des revendications 3 à 5, **caractérisé en ce que** le premier embranchement relie le premier enroulement secondaire (48b1) du transformation convertisseur de courant (48), par l'intermédiaire d'une diode (50) et de la bobine d'induction du transducteur magnétique (52), à la grille du MOSFET (34) correspondant et le deuxième embranchement relie le deuxième enroulement secondaire (48b2) du transformateur convertisseur de courant (48), par l'intermédiaire d'une diode (56), à la grille du MOSFET (34) correspondant.

**7.** Circuit redresseur synchrone selon la revendication 6, **caractérisé en ce que** le premier et le deuxième embranchement sont reliés par l'intermédiaire d'un élément de commutation (64) avec la grille du MOSFET (34) correspondant.

**8.** Circuit redresseur synchrone selon la revendication 7, **caractérisé en ce que** l'élément de commutation (64) est un transistor bipolaire.

**9.** Circuit redresseur synchrone selon l'une des revendications 2 à 8, **caractérisé en ce que** le premier enroulement secondaire (48b1) du transformateur convertisseur de courant (48) présente un nombre d'enroulement supérieur à celui du deuxième enroulement secondaire (48b2) du transformateur convertisseur (48).

**10.** Circuit redresseur synchrone selon la revendication 9, **caractérisé en ce que** le rapport d'enroulement (n1:n22:n21) de l'enroulement primaire (48a) par rapoort au premier enroulement secondaire (48b1) et par rapport au deuxième enroulement secondaire (48b2) du transformateur convertisseur de courant (48) est de l'ordre de 1:100:10.

**11.** Circuit redresseur synchrone selon l'une des revendications précédentes, **caractérisé en ce que** la bobine d'induction du transducteur magnétique (52) comprend un enroulement de commutation (52a) et un enroulement de retour (52b), moyennant quoi l'enroulement de commutation (52a) se trouve dans le premier embranchement et l'enroulement de retour (52b) se trouve dans un embranchement de retour parallèle à celui-ci.

**12.** Circuit redresseur synchrone selon la revendication 11, **caractérisé en ce que** le rapport d'enroulement de l'enroulement de commutation (52a) par rapport à l'enroulement de retour (52b) est de l'ordre de 1:4.

**13.** Circuit redresseur synchrone selon la revendication 12, **caractérisé en ce que** l'embranchement de retour comprend une diode (66).

**14.** Circuit redresseur synchrone selon l'une des revendications précédentes, **caractérisé en ce qu'**un étage de commutation d'entrée (10) est branché en amont du transformateur de puissance (18).

**15.** Circuit redresseur synchrone selon l'une des revendications précédentes, **caractérisé en ce qu'**un étage de filtre de sortie (16) est branché en aval du circuit redresseur (32).

**16.** Convertisseur push-pull avec un. circuit redresseur synchrone selon l'une des revendications précédentes.

Figur 1

Figur 2

Figur 3

Figur 4

Dioden-Gleichrichter

Synchron-Gleichrichter

Figur 5

Figur 6

Figur 7

Figur 8

Figur 9

Figur 10

Figur 11

Figur 12

Figur 13